# EUROPEAN PATENT SPECIFICATION

(11) **EP 1 617 105 B1**
(45) Date of publication and mention of the grant of the patent: **05.09.2012**
(21) Application number: 05015140.6
(22) Date of filing: 12.07.2005
(51) Int. Cl.: F16H 57/02

(54) **Power transmission unit for in particular small-sized vehicles**
Getriebeeinheit, insbesondere für Kleinfahrzeuge
Dispositif de transmission, en particulier pour véhicules de faibles dimensions

(30) Priority: 12.07.2004 JP 2004204857; 09.06.2005 JP 2005170059
(43) Date of publication of application: 18.01.2006
(73) Proprietor: Yamaha Hatsudoki Kabushiki Kaisha, Iwata-shi, Shizuoka-ken (JP)
(72) Inventor: Sugitani, Tsuyoshi c/o Yamaha Hatsudoki Kabushiki Kaisha, Iwata-shi, Shizuoka-ken (JP); Takebe, Mitsukazu c/o Yamaha Hatsudoki Kabushiki Kaisha, Iwata-shi, Shizuoka-ken (JP); Fujii, Isao c/o Yamaha Hatsudoki Kabushiki Kaisha, Iwata-shi, Shizuoka-ken (JP); Hayashi, Junji c/o Yamaha Hatsudoki Kabushiki Kaisha, Iwata-shi, Shizuoka-ken (JP)
(74) Representative: Grünecker, Kinkeldey, Stockmair & Schwanhäusser

(56) References cited:
- EP-A1- 0 558 752
- EP-A2- 1 186 527
- DE-A1- 19 931 011
- JP-A- 2003 287 110
- US-A1- 2002 027 032
- US-A1- 2004 102 267

## Description

The present invention relates to a power unit according to the preamble portion of claim 1, and in particular to a power unit in which a V-belt continuously variable transmission is combined with an engine. Such a power unit according to the preamble portion of claim 1 is known from EP 1 186 527.

As a power unit for small-sized vehicles such as scooter type motorcycles or the like, there are spread ones, in which a V-belt continuously variable transmission is combined with an engine.

With the V-belt continuously variable transmission, a V-belt is wound around a pair of a primary sheave and a secondary sheave, respectively, arranged on a primary shaft, into which a drive force of an engine is input, and a secondary shaft, which takes out a drive force for a drive wheel, and a groove-width adjustment mechanism varies the respective sheaves in groove width to adjust diameters, at which the V-belt is wound around the respective sheaves, thereby steplessly adjusting a transmission gear ratio between the respective sheaves.

Usually, the primary sheave and the secondary sheave comprise a stationary sheave and a moving sheave, which define a V-shaped groove therebetween, and the respective moving sheaves are provided to be movable axially of the primary sheave or the secondary sheave. The groove-width adjustment mechanism moves the respective moving sheaves to enable varying a transmission gear ratio steplessly.

Conventionally, as a groove-width adjustment mechanism in this type of V-belt continuously variable transmission, there is proposed one, which comprises a sheave moving mechanism that imparts axial displacement to a moving sheave of a primary sheave according to an amount of rotation input into a reciprocating gear rotatably mounted on a primary shaft, and an electric motor that imparts a desired amount of rotation to the reciprocating gear through a train of gears, and in which the moving sheave is operatively moved by the electric motor to enable optionally adjusting a transmission gear ratio (see Patent Publication No. 3043061).

By the way, the electric motor used in the groove-width adjustment mechanism is mounted to a crankcase around the reciprocating gear accommodated in the crankcase of an engine.

Therefore, formed on the crankcase are a motor mount hole provided in a position close to the reciprocating gear inside, and a motor mount surface around the motor mount hole to serve as a mount surface, to which a part of the groove-width adjustment mechanism is mounted.

While the motor mount surface is usually formed by milling, it takes time in positioning of the crankcase on a milling machine and adjustment of a tool to be responsible for an increase in manufacturing cost and a decrease in productivity because the crankcase is peculiarly structured to have several curved portions and large in size.

Also, since a plurality of openings, such as holes, etc., through which a cylinder block extends, must be formed on the crankcase together with the motor mount hole, there is caused a problem that a casting metal die for formation of the crankcase is complicated to incur an increase in manufacturing cost.

Further, at the time of mounting the cylinder block, a motor of the groove-width adjustment mechanism, etc. to the crankcase, there is also caused a problem that when directions of assembling and directions of clamping of bolts, respectively, are different, it takes time in assembling work to incur a decrease in productivity.

Hereupon, an object of the invention is related to dissolving the problems and to provide a power unit as indicated above, in which processing of a mount surface, to which a part of a groove-width adjustment mechanism is mounted, and a mount hole on a crankcase is made easy to enable achieving reduction in manufacturing cost and an improvement in assembling quality to enhance productivity.

This objective is solved in an inventive manner by a power unit for, in particular small-sized, vehicles comprising an engine, a belt-type continuously variable transmission accommodated in a transmission casing extending rearward from a crankcase of the engine, and a groove-width adjustment mechanism for controlling a gear ratio of the transmission, wherein a hole to permit a cylinder block to extend therethrough and a hole, through which the groove-width adjustment mechanism extends, are formed on the crank case so that center lines thereof extend in parallel.

The objective is also solved by a power unit for, in particular small-sized, vehicles comprising an engine, a belt-type continuously variable transmission accommodated in a transmission casing extending rearward from a crankcase of the engine, and a groove-width adjustment mechanism for controlling a gear ratio of the transmission, wherein a cylinder block mount surface, to which a cylinder block of the engine is mounted, and a mount surface, to which a part of the groove-width adjustment mechanism is mounted, are formed on the crankcase to be substantially in parallel to, or flush with an imaginary plane, which includes the cylinder block mount surface.

The above-described power units are solving the objective independently of each other as well as in combination with each other.

Beneficially, there is provided a V-belt continuously variable transmission accommodated in the transmission casing to transmit a drive force of the engine to a drive wheel, comprising a primary sheave arranged on a primary shaft, into which the drive force of the engine is input, to form a V-groove for belt winding, a secondary sheave arranged on a secondary shaft, which takes out a drive force for the drive wheel, to form a V-groove for belt winding, a V-belt wound onto the V-grooves of the primary sheave and the secondary sheave to transmit a torque between the both sheaves, wherein the groove-width adjustment mechanism causes an electric motor to impart an optional movement thrust to the moving sheave of the primary sheave to adjust the primary sheave and the secondary sheave in groove width.

Further, beneficially the hole, through which the groove-width adjustment mechanism extends, permits at least one of a casing, the electric motor, those gears, which transmit an output of the electric motor to a reciprocating gear of the groove-width adjustment mechanism, a sheave position detection sensor, which detects a position of the moving sheave, a harness, and a harness fixing member for fixation of the harness, which constitute the groove-width adjustment mechanism, to extend therethrough.

Still further, beneficially there is provided a plurality of gears, which transmit an output of the electric motor to a reciprocating gear in the groove-width adjustment mechanism, wherein the electric motor is constituted as a single motor unit assembled in a predetermined positional relationship by at least a gear closest to the electric motor and a gear meshing with the closest gear, out of the plurality of gears.

Yet further, preferably a direction, in which the cylinder block is mounted, and a direction, in which the groove-width adjustment mechanism is mounted, are made the same.

According to another embodiment, a direction, in which a mount bolt for the cylinder block is clamped, and a direction, in which a mount bolt for the groove-width adjustment mechanism is clamped, are made the same.

According to still another embodiment, there is provided a vehicle mounting thereon the power unit as indicated above.

In the following, the present invention is explained in greater detail with respect to several embodiments thereof in conjunction with the accompanying drawings, wherein:
- Fig. 1: is a side view showing a scooter type motorcycle mounting thereon a power unit, according to an embodiment, in which a V-belt continuously variable transmission for small-sized vehicles is combined with an engine;
- Fig. 2: is a horizontal, cross sectional view showing the power unit according to a first embodiment in Fig. 1;
- Fig. 3: is a side view showing a position, in which a motor unit is mounted to a casing of the V-belt continuously variable transmission shown in Fig. 2;
- Fig. 4: is a view illustrating the motor unit shown in Fig. 3, Fig. 4(a) being a plan view, and Fig. 4(b) being a side view;
- Fig. 5: is a view illustrating a state, in which a spur gear of a final stage in a train of gears is removed from the motor unit shown in Fig. 4, Fig. 5(a) being a plan view, Fig. 5(b) being a side view, and Fig. 5(c) being a view as viewed from an arrow A in Fig. 5(a);
- Fig. 6: is a side view showing a motor with a bevel gear, used in the motor unit shown in Fig. 4,
- Fig. 7: is a side view showing a second bevel gear and an intermediate spur gear, which constitute a train of gears in the motor unit,
- Fig. 8: is a view illustrating a gear support bracket mounted to a tip end of the motor with a bevel gear, shown in Fig. 6, Fig. 8(a) being a plan view, and Fig. 8(b) being a side view,
- Fig. 9: is a view illustrating a unit casing, which fixes a train of gears to an electric motor and provides a surface being mounted to a casing that accommodates therein a V-belt continuously variable transmission, Fig. 9(a) being a plan view, and Fig. 9(b) being a side view,
- Fig. 10: is a view illustrating a second intermediate spur gear mounted in a final stage of the train of gears in the motor unit and an output gear, Fig. 9(a) being a vertical cross sectional view, and Fig. 10(b) being a front view,

- Fig. 11: is a horizontal, cross sectional view showing the positional relationship between a cylinder block mount surface and a unit mount surface, which is a motor mount surface, provided on a crankcase in the motor unit shown in Fig. 2;
- Fig. 12: is a view as viewed from an arrow B in Fig. 11;
- Fig. 13: is a view as viewed from an arrow C in Fig. 12;
- Fig. 14: is a side view showing a further embodiment of a motor unit used in the power unit;
- Fig. 15: is a side view showing a power unit, according to a second embodiment, in which a V-belt continuously variable transmission for small-sized vehicles is combined with an engine;
- Fig. 16: is a perspective view showing a crankcase shown in Fig. 15;
- Fig. 17: is a perspective view illustrating a manner, in which the power unit shown in Fig. 15 is assembled; and
- Fig. 18: is a cross sectional view illustrating an example of a center line of that hole, through which a groove-width adjustment mechanism in the embodiment extends.

Preferred embodiments of a power unit according to the embodiment will be described below in detail with reference to the drawings.

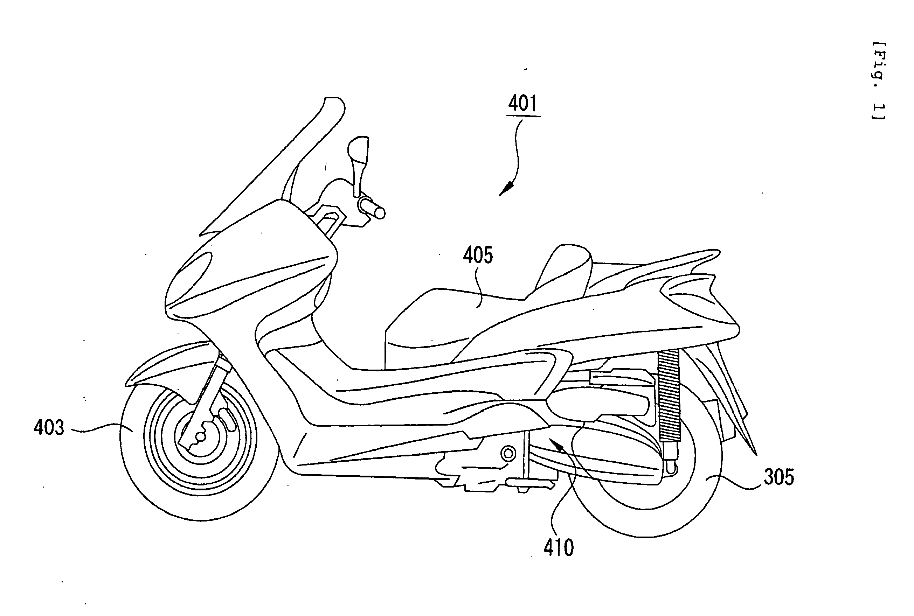

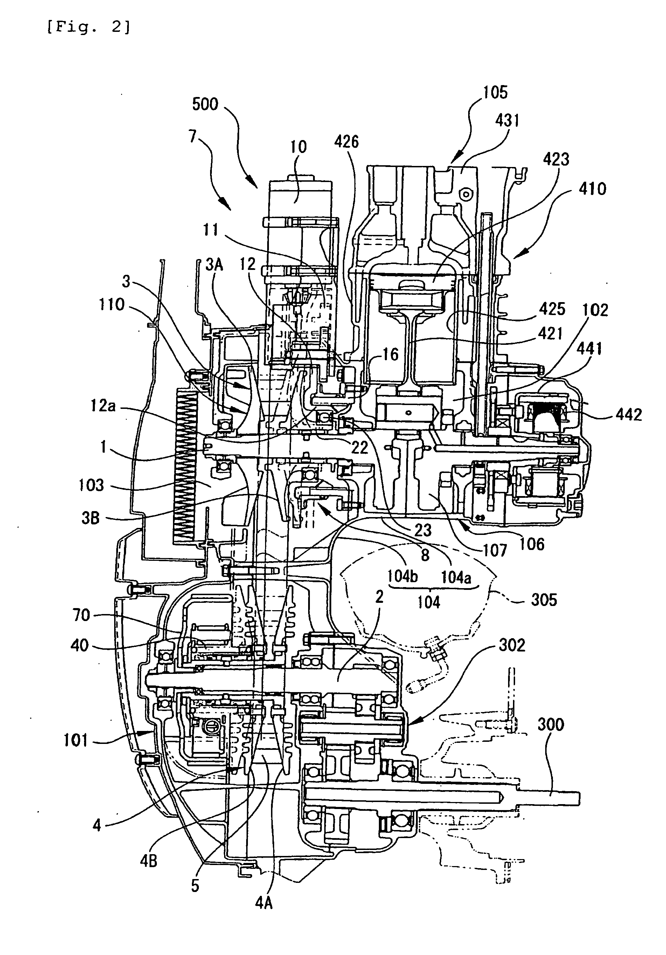

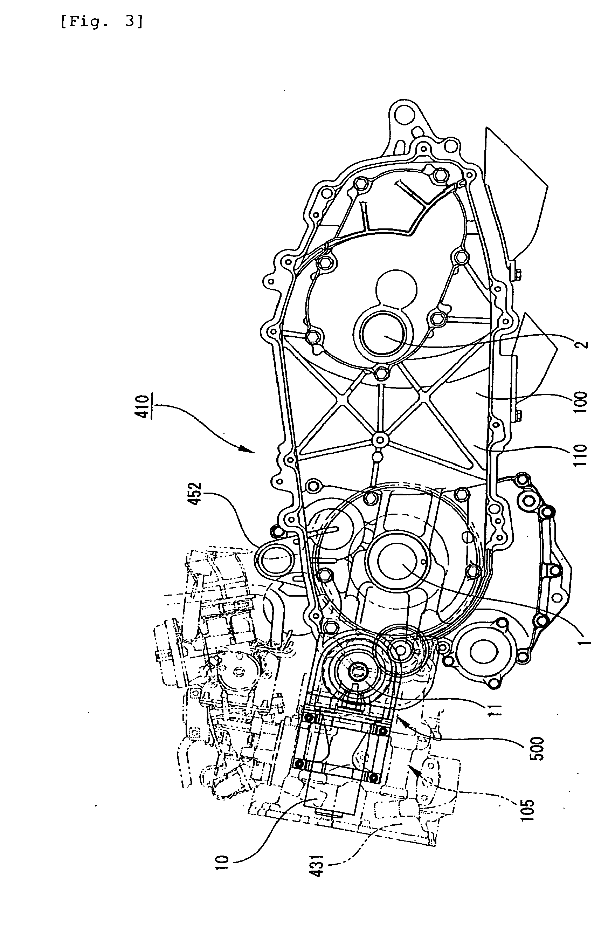

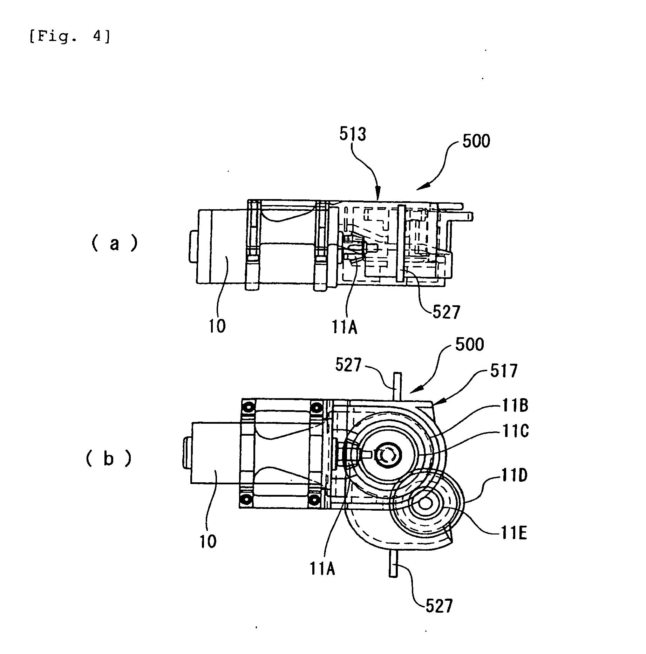

Fig. 1 is a side view showing a scooter type motorcycle mounting thereon a power unit, in which a V-belt continuously variable transmission for small-sized vehicles, according to a first embodiment, is combined with an engine, Fig. 2 is a horizontal, cross sectional view showing the power unit of Fig. 1, Fig. 3 is a side view showing a position, in which a motor unit is mounted to a casing of the V-belt continuously variable transmission shown in Fig. 2, and Fig. 4 is a view illustrating the motor unit shown in Fig. 3, Fig. 4(a) being a plan view, and Fig. 4(b) being a side view.

A motorcycle 401 shown in Fig. 1 comprises a power unit 410 arranged in a position between a front wheel 403 and a rear wheel 305, which serves as a drive wheel, and below a seat 405. A major part of a front surface and both sides of the vehicle is covered by a cowl.

As shown in Figs. 2 and 3, the power unit 410 shown therein comprises an engine 105, a transmission casing 101 extending rearward from crankcases 104, 106 of the engine 105, and a V-belt continuously variable transmission 110 accommodated in a space (a belt chamber 103), which is defined by the transmission casing 101 and the crankcase 104, to vary an output of the engine 105 in speed, the power unit acting to transmit an output of the continuously variable transmission 110 through an automatic centrifugal clutch 70 and a speed reducer 302, which comprises a train of gears, to an axle shaft 300 of the rear wheel 305 arranged rearwardly of the engine 105 and serving as a drive wheel.

The power unit 410 according to the embodiment comprises, as shown in Fig. 2, a crank chamber 102 defined by a right side 104a of the crankcase 104 and the crankcase 106, and the belt chamber 103 defined by a left side 104b of the crankcase 104 and the transmission casing 101. The V-belt continuously variable transmission 110 is accommodated in the belt chamber 103.

In addition, a transmission casing and a crankcase may be constructed to be independent from each other so that a crank chamber is defined only by the crankcase and a belt chamber is defined only by the transmission casing.

The engine 105 comprises, as shown in Fig. 2, the crankcases 104, 106 serving as a casing that rotatably supports a crankshaft 107, pistons 423 connected through connecting rods 421 to the crankshaft 107, a cylinder block 426 joined to upper parts of the crankcases 104, 106 to provide cylinder parts (combustion chambers) 425, in which the pistons 423 slide, and a cylinder head 431 comprising intake and exhaust ports for the respective cylinder parts 425 and ignition plugs and joined to an upper part of the cylinder block 426.

With the engine 105 according to the embodiment, the crankshaft 107 is mounted with an axis thereof directed in a direction of car breadth.

A fly wheel 441 is mounted at a right end of the crankshaft 107, the fly wheel 441 being provided with a generator 442. The generator 442 generates electric power upon rotation of the crankshaft 107 to supply electric power to electric parts mounted on the vehicle and charge a mounted battery with electric power.

Formed integrally at a left end of the crankshaft 107 is a primary shaft 1 that serves as an input shaft of the V-belt continuously variable transmission 110 according to the invention. Mounted to the left side of the crankcase 104 is the transmission casing 101 that defines the belt chamber 103 serving as a space to accommodate the V-belt continuously variable transmission 110.

As shown in Figs. 2 and 3, a turning support 452 for swingable connection to a vehicle frame through a pivot shaft, which is inserted therethrough, is mounted on an upper, outer peripheral surface of the crankcase 104 and the crankcase 106, which define the crank chamber 102.

The V-belt continuously variable transmission 110 comprises the primary shaft 1 formed integral with the crankshaft 107, which serves as an output shaft of the engine 105 being a power source, a secondary shaft 2 arranged in parallel to the primary shaft 1 to take out a drive force for the drive wheel 305, a primary sheave 3 and a secondary sheave 4, respectively, arranged on the primary shaft 1 and the secondary shaft 2 to comprise stationary sheaves 3A, 4A and moving sheaves 3B, 4B, which define V-grooves for winding of a belt, the V-grooves being varied in groove width upon movements of the moving sheaves 3B, 4B in an axial direction (a left and right direction in Fig. 2), a V-belt 5 wound onto the V-grooves of the primary sheave 3 and the secondary sheave 4 to transmit a torque between the both sheaves 3, 4, and a groove-width adjustment mechanism 7 that uses an electric motor 10 to move the moving sheave 3B to adjust the primary sheave 3 and the secondary sheave 4 in groove width, and the groove-width adjustment mechanism 7 varies groove widths of the primary sheave 3 and the secondary sheave 4 to adjust diameters of the V-belt 5 wound around the respective sheaves 3, 4 whereby a transmission gear ratio is steplessly adjusted between the primary sheave 3 and the secondary sheave 4.

The groove-width adjustment mechanism 7 comprises a sheave moving mechanism 8 that displaces the moving sheave 3B in an axial direction according to an amount of rotation input into a reciprocating gear 12 rotatably mounted on the primary shaft 1, and the electric motor 10 that imparts a desired amount of rotation to the reciprocating gear 12 through a train of gears 11, and the electric motor 10 as a drive source moves the moving sheaves 3B, 4B to adjust the primary sheave 3 and the secondary sheave 4 in groove width.

The reciprocating gear 12 is formed integrally on an outer periphery thereof with teeth, which receive an output from the electric motor 10, and provided integrally on an inner periphery thereof with an annular rotating ring 12a. The rotating ring 12a is rotatably fitted onto an outer periphery of a cylindrical slider 22, which is fixed to the moving sheave 3B, through a bearing 23.

The rotating ring 12a and the slider 22 are restricted in axial relative movement by a retaining ring or the like, which latches the bearing 23. Also, male threads are provided on an outer periphery of the rotating ring 12a, the male threads being screwed onto female threads provided on an inner periphery of a feed guide cylinder 16 fixed to the crankcase 106. The feed guide cylinder 16 is cylindrical-shaped to be concentric with the primary shaft 1.

With such construction, when the reciprocating gear 12 is rotated, the reciprocating gear 12 threadedly advances on the feed guide cylinder 16 according to a given amount of rotation. As the reciprocating gear 12 threadedly advances, the slider 22 joined to the reciprocating gear 12 through the bearing 23 and the moving sheave 3B are displaced in the axial direction.

That is, the sheave moving mechanism 8 for axial displacement of the moving sheave 3B according to rotation of the reciprocating gear 12 comprises the bearing 23 fitted onto an inner periphery of the rotating ring 12a of the reciprocating gear 12, the slider 22 fitted onto an inner periphery of the bearing 23 and made integral with the moving sheave 3B, the feed guide cylinder 16, into which the rotating ring 12a is screwed, and the like.

On the other hand, the moving sheave 4B of the secondary sheave 4 is mounted on the secondary shaft 2 to be movable in the axial direction, biased in a direction toward the stationary sheave 4A by a compression coil spring 40, and displaced in the axial direction according to tension acted by the V-belt 5 in contact with the V-grooves.

For example, when the moving sheave 3B of the primary sheave 3 is displaced in a direction of decreasing groove width to increase that diameter, at which the V-belt 5 is wound around the primary sheave 3, the V-belt 5 wound around the secondary sheave 4 is correspondingly drawn toward the primary sheave 3, so that tension acting on the V-belt 5 is increased. Such increase in tension pushes the moving sheave 4B of the secondary sheave 4 in a direction of increasing groove width, so that the V-belt 5 is decreased in wound diameter and a transmission gear ratio corresponding to a ratio of wound diameters of the V-belt around the respective sheaves is obtained.

With the embodiment, the electric motor 10 and the train of gears 11 comprising a plurality of gears for transmission of an output of the electric motor 10 to the reciprocating gear 12 are provided as a single motor unit 500 assembled in a predetermined positional relationship.

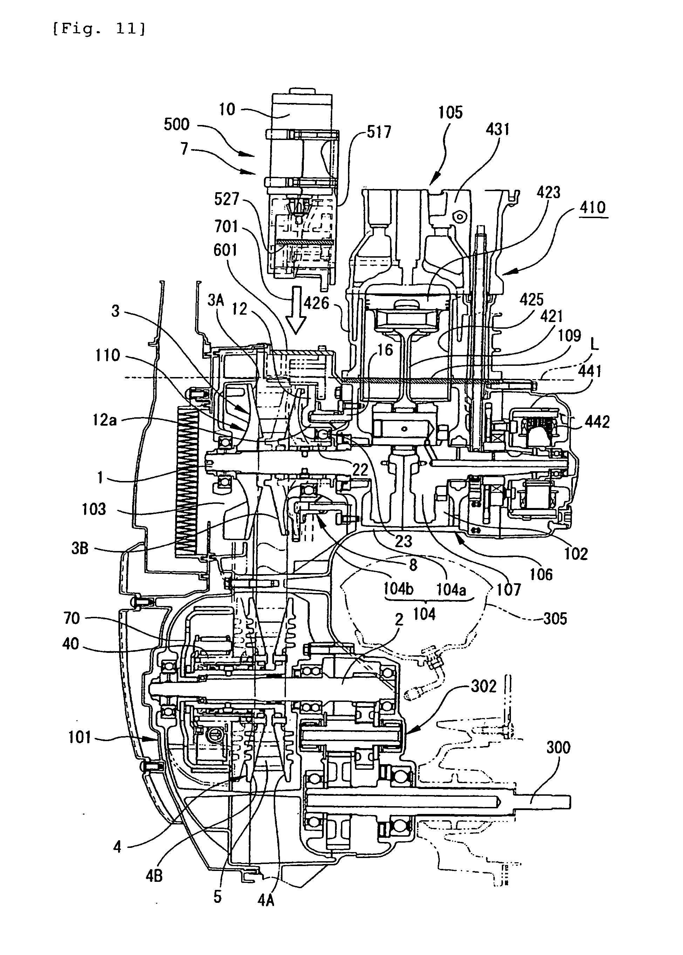

Rotation of the electric motor 10 can be transmitted to the reciprocating gear 12 by mounting the motor unit 500, which constitutes a part of the groove-width adjustment mechanism 7, to a unit mount surface (a mount surface, to which a part of the groove-width adjustment mechanism is mounted) 601 (see Fig. 11) formed on an outer surface of the left side 104b of the crankcase 104, which defines the belt chamber 103 accommodating therein the respective sheaves 3, 4, and inserting the train of gears 11 of the groove-width adjustment mechanism 7 through a unit mount hole (a hole, through which the groove-width adjustment mechanism extends) 600.

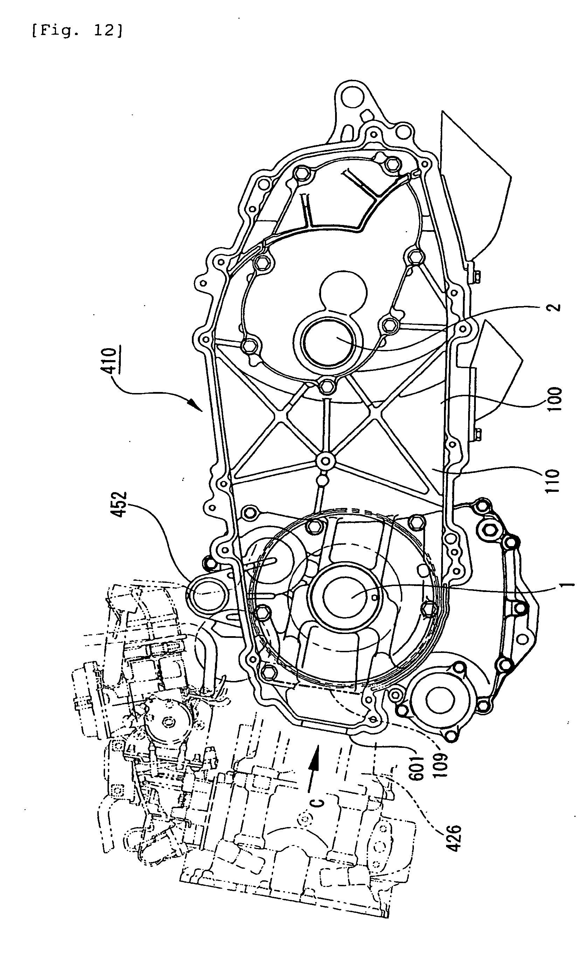

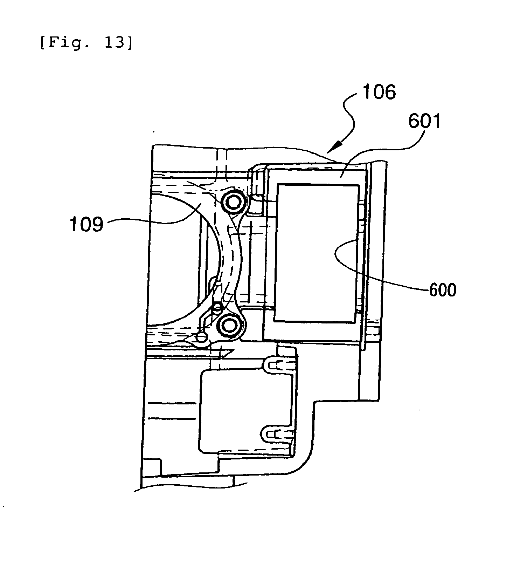

With the embodiment, the unit mount surface 601, to which a part of the groove-width adjustment mechanism 7 is mounted, is formed on the same side as a side of a cylinder block mount surface 109, to which the cylinder block 426 of the engine 105 is mounted, to be made substantially in parallel to an imaginary plane L, which includes the cylinder block mount surface 109, on the crankcases 104, 106, as shown in Figs. 11 to 13.

The motor unit 500 according to the embodiment is arranged, as shown in Figs. 2 and 3, to be positioned laterally of the cylinder block 426 and forwardly of the V-belt continuously variable transmission 110 toward the front of the vehicle, and mounted on the left side 104b of the crankcase 104 in a direction, in which an output shaft of the electric motor 10 is perpendicular to the primary shaft 1.

The train of gears 11 mounted on the electric motor 10 comprises, as shown in Figs. 4 to 6, a bevel gear (a gear closest to the electric motor 10) 11A directly connected to the output shaft of the electric motor 10, a second bevel gear (a gear meshing with the closest gear) 11 B that meshes with the bevel gear 11A, an intermediate spur gear 11C provided coaxial with the second bevel gear 11B to rotate together with the second bevel gear 11B, a second intermediate spur gear 11D that meshes with the intermediate spur gear 11C, and an output gear 11E provided coaxial with the second intermediate spur gear 11D to mesh with teeth on an outer periphery of the reciprocating gear 12.

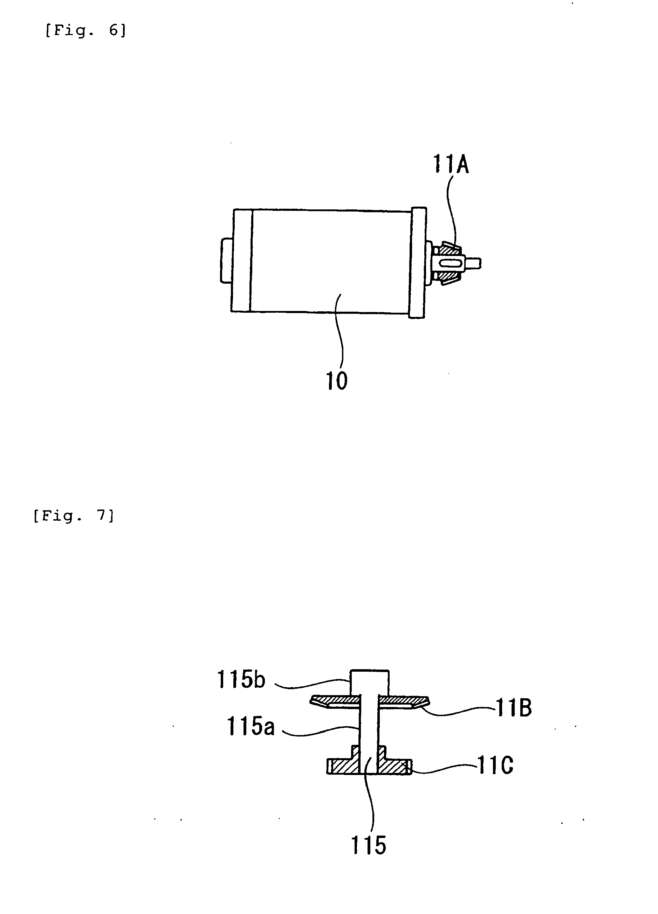

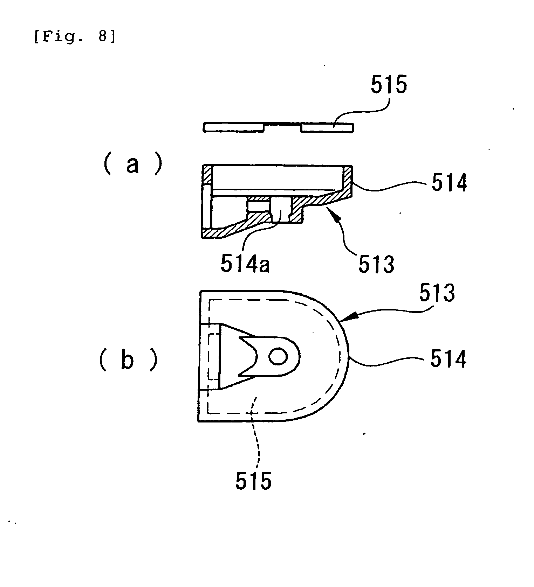

As shown in Fig. 7, the second bevel gear 11B and the intermediate spur gear 11C are fixed to a single support shaft 511 and mounted to a tip end of the electric motor 10 through a gear support bracket 513 shown in Fig. 8.

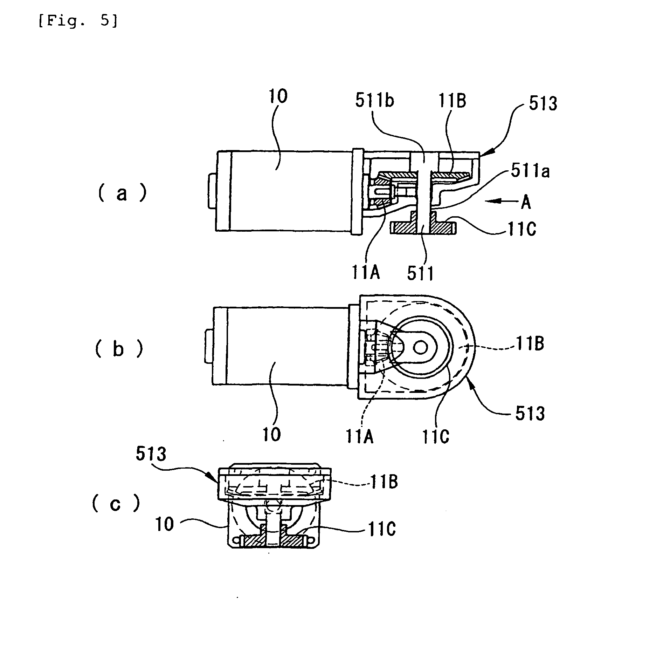

The gear support bracket 513 comprises a bracket body 514 having a shaft insertion hole 514a, into which a small-diameter part 511a of the support shaft 511 is fitted, and a bottomed cover 515 that holds a large-diameter part 511 b of the support shaft 511. The bracket 513 accommodates the second bevel gear 11 B in an accommodation space defined by the bracket body 514 and the bottomed cover 515 as shown in Fig. 5(a), and the intermediate spur gear 11C rotatably supports the support shaft 511 in a state of being exposed outside the bracket body 514.

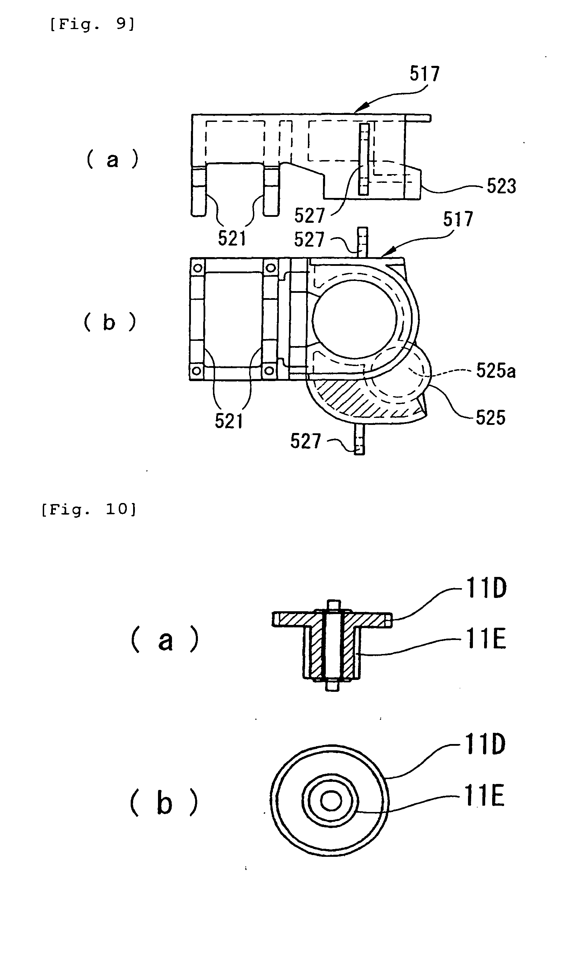

The gear support bracket 513 is fixed to the electric motor 10 through a unit casing 517 shown in Fig. 9.

The unit casing 517 comprises clamp ring parts 521 that clamp a drum part of the electric motor 10 to fix the same thereto, a bracket support 523 that holds and fixes that outer periphery of the gear support bracket 513, which is caused to abut against the tip end of the electric motor 10, a gear support 525 that rotatably supports the second intermediate spur gear 11D and the output gear 11E, and a fixed sheave part 527 that abuts against the unit mount surface 601 to be screwed thereto.

The second intermediate spur gear 11D and the output gear 11E are formed integral and coaxial with each other and have a support shaft 11 F inserted centrally therethrough as shown in Fig. 10. The support shaft 11F is rotatably supported by a gear support hole, which is formed on the gear support 525 of the unit casing 517, whereby the second intermediate spur gear 11D is supported in a state of meshing with the intermediate spur gear 11C, and rotation of the output shaft of the electric motor 10 is output to the output gear 11E.

The motor unit 500 constructed in the above manner is fixed to the crankcase 104 in a state, in which the train of gears 11 is caused to extend through the unit mount hole 600, by having the fixed sheave part 527 of the unit casing 517 approaching the unit mount surface 601 of the crankcase 104 in an axial direction of the electric motor 10 as indicated by an arrow 701 in Fig. 11 to cause the same to abut against the unit mount surface 601 and screwing the fixed sheave part 527 to the unit mount surface 601.

In a state, in which the motor unit 500 is fixed to the crankcase 104, the output gear 11E in a final stage is put in a state to appropriately mesh with the reciprocating gear 12 in the crankcase 104 as shown in Figs. 2 and 3.

The V-belt continuously variable transmission 110 according to the embodiment varies the primary sheave 3 and the secondary sheave 4 in groove width with the use of the groove-width adjustment mechanism 7 described above, to adjust diameters of the V-belt 5 wound around the respective sheaves 3, 4 to steplessly adjust a transmission gear ratio between the primary sheave 3 and the secondary sheave 4.

Subsequently, an explanation will be given to an operation of the V-belt continuously variable transmission 110 according to the embodiment.

The electric motor 10 is driven by a control device, which has the function of detecting an operating state of a vehicle, to rotate forward or reversely so as to obtain a desired transmission gear ratio.

When the electric motor 10 rotates forward to drive the output gear 11E of the train of gears 11 in forward rotation, the reciprocating gear 12, with which the output gear 11E meshes, rotates forward to move the moving sheave 3B in a direction, in which the primary sheave 3 is decreased in groove width, owing to the lead action caused by threading between the rotating ring 12a and the feed guide cylinder 16.

In the case where the primary sheave 3 is decreased in groove width, a wound diameter of the belt 5 is increased and the transmission gear ratio shifts toward Top.

Conversely, when the electric motor 10 is caused to rotate reversely, that axial displacement, which accompanies reverse rotation of the reciprocating gear 12, moves the moving sheave 3B in a direction, in which the primary sheave 3 is increased in groove width. In the case where the primary sheave 3 is increased in groove width, a wound diameter of the belt 5 is decreased and the transmission gear ratio shifts toward Low.

At this time, as the primary sheave 3 is varied in groove width, the secondary sheave 4 is varied in groove width in opposition to that manner, in which the primary sheave 3 is varied.

More specifically, when a diameter, at which the V-belt 5 is wound around the primary sheave 3, is decreased (shifts toward Low), a force, with which the V-belt 5 bites into the secondary sheave 4, decreases, so that slip is generated between the moving sheave 4B and the V-belt to produce a difference in speed between the moving sheave 4B and the stationary sheave 4A. Then, the moving sheave 4B is pushed toward the stationary sheave 4A by an action of the cam groove 61 and the bias of the compression coil spring 40, so that the secondary sheave 4 is decreased in groove width and a wound diameter of the V-belt 5 is increased.

As a result, the transmission gear ratio between the primary sheave 3 and the secondary sheave 4 is increased to lead to an increase in torque being transmitted to the drive wheel 305.

On the contrary, when a diameter, at which the V-belt 5 is wound around the primary sheave 3, is increased (shifts toward Top), the V-belt 5 bites into the V-groove on the secondary sheave 4 and the moving sheave 4B is moved in a direction, in which it goes away from the stationary sheave 4A, against the bias of the compression coil spring 40. Therefore, the secondary sheave 4 is increased in groove width and a wound diameter of the V-belt 5 is increased, so that the transmission gear ratio between the primary sheave 3 and the secondary sheave 4 is decreased.

When the number of revolutions of the secondary sheave 4 becomes equal to or more than a predetermined value, the secondary sheave 4 is coupled to the secondary shaft 2 through the centrifugal clutch 70 whereby rotation of the secondary sheave 4 is transmitted to the axle shaft 300 through a train of gears of the speed reducer 302.

With the V-belt continuously variable transmission 110 of the power unit 410 described above, the electric motor 10 for adjustment of groove widths of the respective sheaves 3, 4 and the train of gears 11 for transmission of an output of the electric motor 10 to the reciprocating gear 12 are provided in a state of being assembled into the single motor unit 500.

Accordingly, reduction in the number of assembly processes is achieved at the time of assembly of the V-belt continuously variable transmission 110 or the like to improve the assembling quality since in the assembly process of assembling the V-belt continuously variable transmission 110 into the crankcases 104, 106 and the transmission casing 101, a single mount work of mounting the motor unit 500 on the unit mount surface 601 of the crankcase 104 enables transmission of power from the electric motor 10 to the reciprocating gear 12 on the primary shaft 1 to dispense with independent mount works and positional adjustment for the electric motor 10 alone and the respective gears 11A to 11E of the train of gears 11.

Also, with the power unit 410 in the embodiment, since the unit mount surface 601 formed on the crankcase 104 and serving as a mount surface, to which a part of the groove-width adjustment mechanism is mounted, is substantially in parallel to the cylinder block mount surface 109, setting the crankcase 104 on a milling machine in order to process the cylinder block mount surface 109 makes it possible to shift to processing of the unit mount surface 601 after the processing of the cylinder block mount surface 109 without changing a position, in which the crankcase 104 is set on the milling machine.

That is, it is not necessary to do over again positioning of the crankcase 104 with a view to processing the unit mount surface 601, and it is possible to simply carry out processing of the unit mount surface 601 omitting a troublesome work of positioning, thus enabling achieving reduction in manufacturing cost and an improvement in productivity.

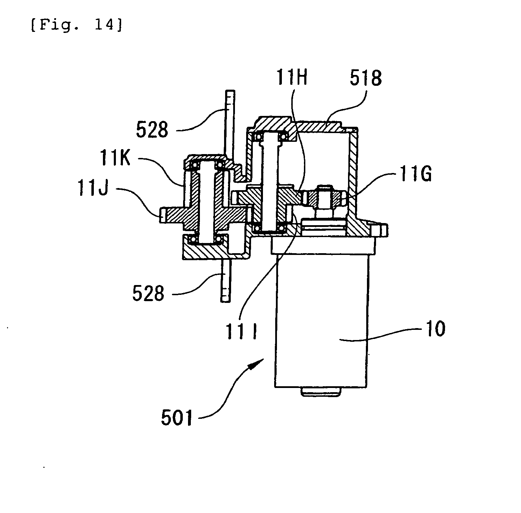

In addition, with the embodiment, the motor unit 500 is constructed such that the train of gears 11 assembled into the electric motor 10 uses bevel gears to change a direction of output. However, a motor unit 501 shown in Fig. 14 is also usable.

The motor unit 501 is mounted to the unit mount surface 601 with a motor shaft of the electric motor 10 directed in parallel to the primary shaft 1.

Therefore, a train of gears mounted on the motor unit 501 to comprise a plurality of gears is a combination of only a spur gear (a gear closest to the electric motor 10) 11G, a spur gear (a gear meshing with the closest gear) 11H, a spur gear 11I, a spur gear 11J, and a spur gear 11K as shown in Fig. 14.

The spur gear 11G is directly connected to a motor shaft. The spur gear 11H is a relay gear meshing with the spur gear 11G and formed integral and coaxial with the spur gear 11I. The spur gear 11J is a relay gear meshing with the spur gear 11I and formed integral and coaxial with the spur gear 11K serving as an output gear.

The respective gears 11H to 11K are rotatably supported by a unit casing 518 screwed and fixed to the electric motor 10.

The unit casing 518 is formed with a fixation flange 528, which will abut against the unit mount surface 601 and extends along the motor shaft, and the motor unit 501 is fixed to the crankcase 104 by screwing the fixation flange 528 to the unit mount surface 601.

That is, as apparent from comparison between the motor unit 500 and the motor unit 501, a motor unit used in the power unit 410 in the embodiment can adopt a configuration, in which a motor shaft is directed either perpendicular to the primary shaft 1 or in parallel to the primary shaft 1.

Also, with the power unit 410 in the embodiment, the electric motor 10 and the train of gears 11 composed of a plurality of gears, which transmit an output of the electric motor 10 to the reciprocating gear 12 are mounted as a single motor unit 500(501) on the crankcase 106.

Hereupon, the motor unit 500(501) is capable of being mounted and dismounted as a whole unit, and can also use a V-belt continuously variable transmission (a mechanical V-belt continuously variable transmission making use of a centrifugal governor), which does not need the electric motor 10, and the crankcase 106 in common.

That is, only processing of the unit mount hole 600 makes it possible to use the crankcase 104 for an electrically-driven V-belt continuously variable transmission or a mechanical V-belt continuously variable transmission. In this case, it is most effective when all of those plurality of gears, which transmit an output of the electric motor 10 to the reciprocating gear 12, are assembled into the motor unit 500(501).

Further, while the embodiment provides a single motor unit 500(501), into which all of those plurality of gears, which transmit an output of the electric motor 10 to the reciprocating gear 12, are assembled in a predetermined positional relationship with the electric motor 10, the teaching of the embodiment is not limited thereto but can also provide a single motor unit, into which at least a gear closest to the electric motor 10 and a gear meshing with the closest gear, among the plurality of gears, are assembled in a predetermined positional relationship with each other.

Also, with the embodiment, that mount surface formed in the crankcase 104, to which a part of the groove-width adjustment mechanism is mounted, is made the unit mount surface 601 that mounts thereon the motor unit 500, into which a plurality of gears are assembled, but it is also conceivable to fix the electric motor 10 alone to the crankcase 104.

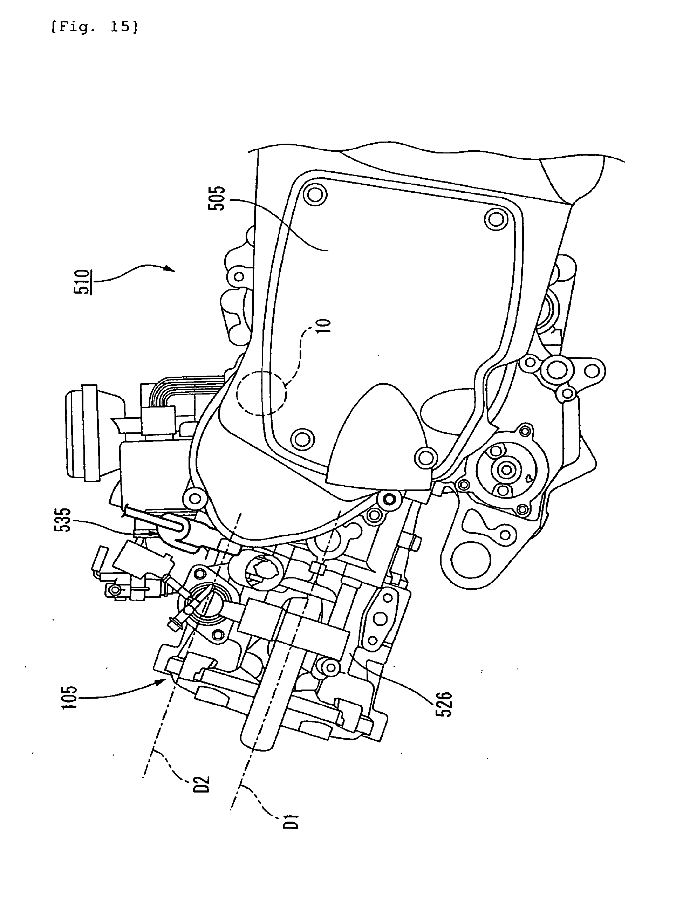

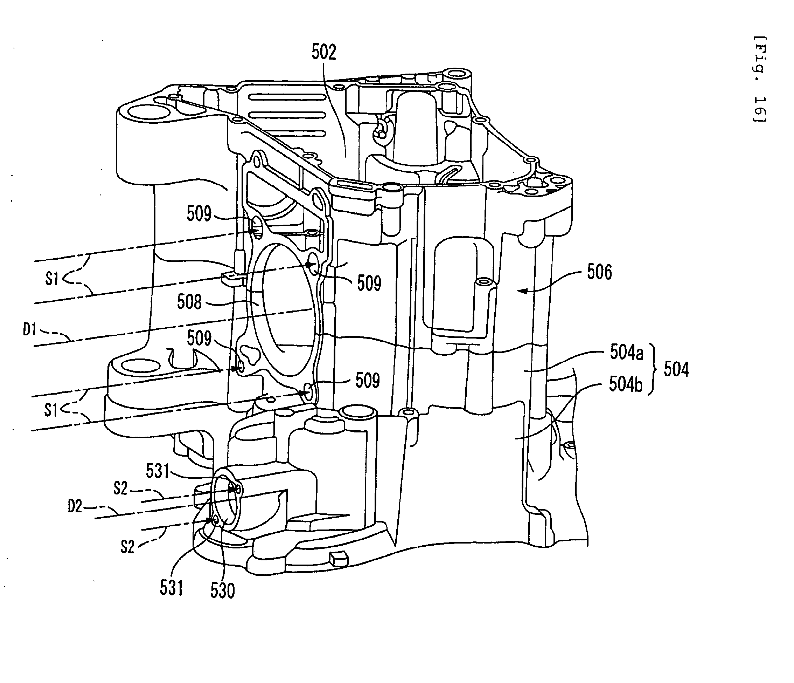

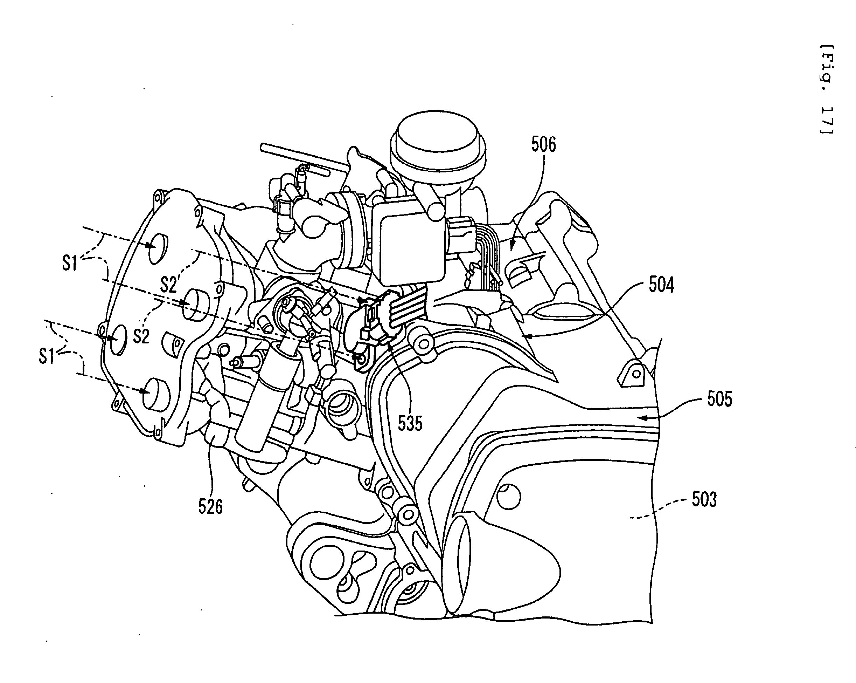

Fig. 15 is a side view showing a power unit, according to a second embodiment, in which a V-belt continuously variable transmission, for small-sized vehicles is combined with an engine, Fig. 16 is a perspective view showing a crankcase shown in Fig. 15, and Fig. 17 is a perspective view illustrating a manner, in which the power unit shown in Fig. 15 is assembled. In addition, substantially the same constituent parts as those of the power unit 410 in the first embodiment are denoted by the same reference numerals and an explanation therefor is omitted.

A power unit 510 according to the second embodiment is constructed to comprise, as shown in Figs. 15 to 17, an engine 105, a transmission casing 501 extending rearward from crankcases 504, 506 of the engine 105, and a V-belt continuously variable transmission (not shown) accommodated in a space (a belt chamber 503), which is defined by the transmission casing 501 and the crankcase 504, to vary an output of the engine 105 in speed.

The power unit 510 comprises a crank chamber 502 defined by a right side 504a of the crankcase 504 and the crankcase 506, and the belt chamber 503 defined by a left side 504b of the crankcase 504 and the transmission casing 501. The V-belt continuously variable transmission 110 is accommodated in the belt chamber 503.

With the embodiment, an electric motor 10 of a groove-width adjustment mechanism that adjusts a primary sheave and a secondary sheave in groove width by imparting an optional movement thrust to a moving sheave of the primary sheave in the V-belt continuously variable transmission is accommodated in the belt chamber 503 with a motor shaft arranged in parallel to a primary shaft.

Further, a sheave position detection sensor 535 that constitutes the groove-width adjustment mechanism is assembled to a sensor mount hole (a hole, through which the groove-width adjustment mechanism extends) 530 (see Fig. 16) formed on an outer surface of a left side 504b of the crankcase 504 that defines the belt chamber 103, and detects a position of the moving sheave in the belt chamber 503.

With the embodiment, a cylinder block mount hole 508, to which a cylinder block 526 of the engine 105 is mounted, and a sensor mount hole 530, through which the groove-width adjustment mechanism extends, are formed on the crankcases 504, 506 so that center lines D1, D2 thereof are made in parallel to each other.

Thus slide cores for formation of the cylinder block mount hole 508 and the sensor mount hole 530 on the crankcase 504 move in the same direction, so that a casting metal die for formation of the crankcase 504 is made simple in structure whereby reduction in cost of the metal die can be achieved.

Also, with the embodiment, a direction, in which the cylinder block 526 being mounted to the cylinder block mount hole 508 along the center line D1 is mounted, and a direction, in which the sheave position detection sensor 535 being mounted to the sensor mount hole 530 along the center line D2 is mounted, are made the same, and a direction S1, in which mount bolts clamp the cylinder block 526 to threaded holes 509, and a direction S2, in which mount bolts clamp the sheave position detection sensor 535 to threaded holes 531, are made the same.

Thus directions D1, D2, in which the cylinder block 526 and the sheave position detection sensor 535 are mounted to the crankcases 504, 506, are made the same, and directions S1, S2, in which respective clamp jigs (not shown) clamp the mount bolts, are made the same, whereby the assembly can be improved in workability.

In addition, while the power unit 510 according to the second embodiment has been described taking the case of the sensor mount hole 530, through which the sheave position detection sensor 535 extends, as a hole, through which the groove-width adjustment mechanism extends, the teaching of the embodiment is not limited thereto. The hole, through which a groove-width adjustment mechanism in the embodiment extends, permits at least one of a casing, an electric motor, gears, which transmit an output of the electric motor to a reciprocating gear in the groove-width adjustment mechanism, a harness connected to a sheave position detection sensor, and a harness fixing member for fixation of the harness, which constitute the groove-width adjustment mechanism, to extend therethrough.

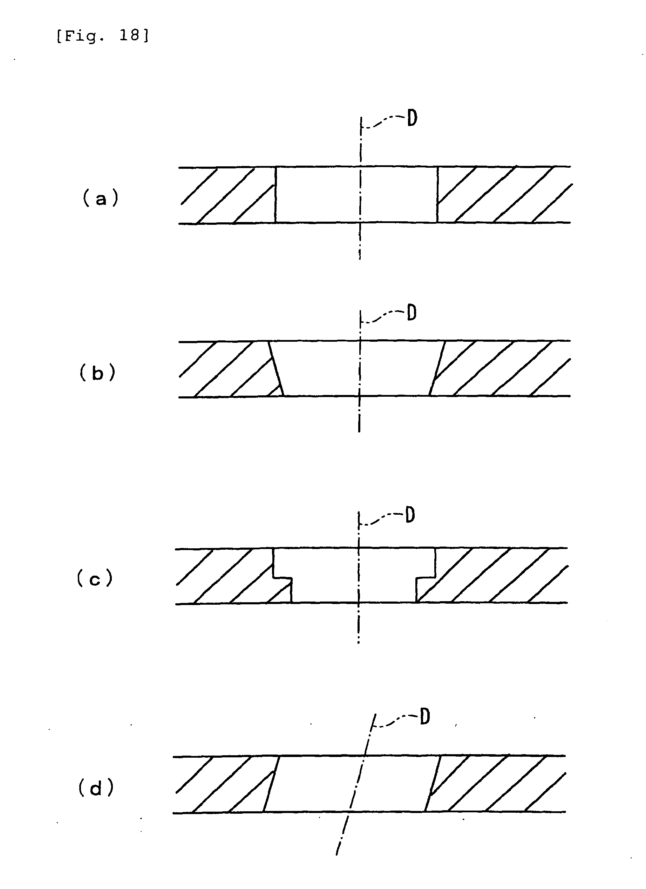

Further, a center line D of that hole, through which a groove-width adjustment mechanism in the power unit according to the embodiment extends, is a straight line extending in that direction, through which the hole extends, and the straight line is positioned equidistant from an inner peripheral wall of the hole irrespective of a cross sectional shape of the hole in the case where an opened shape of the hole is circular as shown in, for example, Figs. 18(a) to 18(d).

Also, while the embodiment has been described with respect to the power unit 410 for motorcycles, the power unit 410 according to the embodiment is not limited to motorcycles but of course applicable also to three-wheeled or four-wheeled buggies being relatively lightweight and small-sized vehicles.

The description above discloses (amongst others) a power unit comprising an engine, a transmission casing extending rearward from a crankcase of the engine, and a V-belt continuously variable transmission accommodated in the transmission casing to transmit a drive force of the engine to a drive wheel, and in which the V-belt continuously variable transmission comprises a primary sheave arranged on a primary shaft, into which the drive force of the engine is input, to form a V-groove for belt winding, a secondary sheave arranged on a secondary shaft, which takes out a drive force for the drive wheel, to form a V-groove for belt winding, a V-belt wound onto the V-grooves of the primary sheave and the secondary sheave to transmit a torque between the both sheaves, and a groove-width adjustment mechanism that causes an electric motor to impart an optional movement thrust to the moving sheave of the primary sheave to adjust the primary sheave and the secondary sheave in groove width, and in which a hole formed on the crankcase to permit a cylinder block to extend therethrough and a hole, through which the groove-width adjustment mechanism extends, are formed so that center lines thereof are made in parallel to each other.

In addition, preferably, the hole, through which the groove-width adjustment mechanism extends, permits at least one of a casing, the electric motor, those gears, which transmit an output of the electric motor to a reciprocating gear of the groove-width adjustment mechanism, a sheave position detection sensor, which detects a position of the moving sheave, a harness, and a harness fixing member for fixation of the harness, which constitute the groove-width adjustment mechanism, to extend therethrough.

Further, preferably, a plurality of gears, which transmit an output of the electric motor to a reciprocating gear in the groove-width adjustment mechanism, are provided, and the electric motor is constituted as a single motor unit assembled in a predetermined positional relationship by at least a gear closest to the electric motor and a gear meshing with the closest gear, out of the plurality of gears.

The description above further discloses a power unit comprising an engine, a transmission casing extending rearward from a crankcase of the engine, and a V-belt continuously variable transmission accommodated in the transmission casing to transmit a drive force of the engine to a drive wheel, and in which the V-belt continuously variable transmission comprises a primary sheave arranged on a primary shaft, into which the drive force of the engine is input, to form a V-groove for belt winding, a secondary sheave arranged on a secondary shaft, which takes out a drive force for the drive wheel, to form a V-groove for belt winding, a V-belt wound onto the V-grooves of the primary sheave and the secondary sheave to transmit a torque between the both sheaves, and a groove-width adjustment mechanism that causes an electric motor to impart an optional movement thrust to the moving sheave of the primary sheave to adjust the primary sheave and the secondary sheave in groove width, and in which a cylinder block mount surface, to which a cylinder block of the engine is mounted, and a mount surface, to which a part of the groove-width adjustment mechanism is mounted, are formed on the crankcase to be substantially in parallel to, or flush with an imaginary plane, which includes the cylinder block mount surface.

Further, preferably, a direction, in which the cylinder block is mounted, and a direction, in which the groove-width adjustment mechanism is mounted, are made the same.

Also, preferably, a method, in which a mount bolt for the cylinder block is clamped, and a direction, in which a mount bolt for the groove-width adjustment mechanism is clamped, are made the same.

Also, a vehicle desirably mounts thereon the power unit constructed in the above manner is disclosed.

With the above discussed embodiments of the power unit, a hole formed on the crankcase to permit a cylinder block to extend therethrough and a hole, through which the groove-width adjustment mechanism extends, are made so that center lines thereof are made in parallel to each other.

Hereupon, slide cores for formation of these holes on the crankcase move in the same direction, so that a casting metal die for formation of the crankcase is made simple in structure. Also, when the cylinder block and the groove-width adjustment mechanism are mounted to the crankcase, directions of mount and directions, in which mount bolts are clamped, are made the same, thus leading to an improvement in workability.

Also, since a mount surface, to which a part of the groove-width adjustment mechanism formed on the crankcase is mounted, is substantially in parallel to, or flush with an imaginary plane, which includes the cylinder block mount surface, setting the crankcase on a milling machine in order to process the cylinder block mount surface makes it possible to shift to processing of the mount surface, to which a part of the groove-width adjustment mechanism is mounted, after the processing of the cylinder block mount surface without changing a position, in which the crankcase is set on the milling machine.

That is, it is not necessary to do over again positioning of the crankcase with a view to processing the mount surface, to which a part of the groove-width adjustment mechanism is mounted, and it is possible to readily carry out processing of the mount surface, to which a part of the groove-width adjustment mechanism is mounted, omitting a troublesome work of positioning, thus enabling achieving reduction in manufacturing cost and an improvement in productivity.

The description discloses, as a preferred embodiment, in order to provide a power unit, in which processing of a mount surface, to which a part of a groove-width adjustment mechanism on a crankcase is mounted, is made easy to enable achieving reduction in manufacturing cost and an improvement in assembling quality to enhance productivity, a power unit 410 for small-sized vehicles, constructed to combine a V-belt continuously variable transmission 110 with an engine 105, and using an electric motor 10 for a groove-width adjustment mechanism 7 that adjusts a primary sheave 3 and a secondary sheave 4 in groove width, a unit mount surface 601, to which a motor unit 500 is mounted, is formed on the same side as a side of a cylinder block mount surface 109, to which a cylinder block 426 is mounted, to be made substantially in parallel to an imaginary plane L, which includes the cylinder block mount surface 109.

## Claims

1. Power unit for, in particular small-sized, vehicles comprising
an engine (105),
a belt-type continuously variable transmission (110) accommodated in a transmission casing (101) extending rearward from a crankcase (104) of the engine (105), and
a groove-width adjustment mechanism (7) for controlling a gear ratio of the transmission (110),
**characterized in that**
a cylinder block mount hole (508) to permit a cylinder block (426) of the engine (105) to extend therethrough and a hole (600; 530), through which the groove-width adjustment mechanism (7) extends, are formed on the crank case (104) so that center lines (D1,D2) thereof extend in parallel.

2. Power unit according to claim 1,
**characterized in that**
a cylinder block mount surface (109), to which the said cylinder block (426) of the engine (105) is mounted, and a mount surface (601), to which a part of the groove-width adjustment mechanism (7) is mounted, are formed on the crankcase (106) to be substantially in parallel to, or flush with an imaginary plane (L), which includes the cylinder block mount surface (109).

3. Power unit according to claim 1 or 2, **characterized by** a V-belt continuously variable transmission (110) accommodated in the transmission casing (101) to transmit a drive force of the engine (105) to a drive wheel (305), comprising a primary sheave (3) arranged on a primary shaft (1), into which the drive force of the engine (105) is input, to form a V-groove for belt winding, a secondary sheave (4) arranged on a secondary shaft (2), which takes out a drive force for the drive wheel (305), to form a V-groove for belt winding, a V-belt (5) wound onto the V-grooves of the primary sheave (3) and the secondary sheave (4) to transmit a torque between the both sheaves (3,4), wherein the groove-width adjustment mechanism (7) causes an electric motor (10) to impart an optional movement thrust to the moving sheave (3A) of the primary sheave (3) to adjust the primary sheave (3) and the secondary sheave (4) in groove width.

4. Power unit according to one of the claims 1 to 3, **characterized in that** the hole (600; 530), through which the groove-width adjustment mechanism (7) extends, permits at least one of a casing, the electric motor (10), those gears (11), which transmit an output of the electric motor (10) to a reciprocating gear (12) of the groove-width adjustment mechanism (7), a sheave position detection sensor (535), which detects a position of the moving sheave (3A), a harness, and a harness fixing member for fixation of the harness, which constitute the groove-width adjustment mechanism (7), to extend therethrough.

5. Power unit according to one of the claims 1 to 4, **characterized by** a plurality of gears (11), which transmit an output of the electric motor (10) to a reciprocating gear (12) in the groove-width adjustment mechanism (7), wherein the electric motor (10) is constituted as a single motor unit (500) assembled in a predetermined positional relationship by at least a gear closest to the electric motor (10) and a gear meshing with the closest gear, out of the plurality of gears (11).

6. Power unit according to one of the claims 1 to 5, **characterized in that** a direction, in which the cylinder block (426) is mounted, and a direction, in which the groove-width adjustment mechanism (7) is mounted, are made the same.

7. Power unit according to one of the claims 1 to 6, **characterized in that** a direction, in which a mount bolt for the cylinder block (426) is clamped, and a direction, in which a mount bolt for the groove-width adjustment mechanism (7) is clamped, are made the same.

8. Vehicle mounting thereon the power unit according to claims 1 to 7.

## Patentansprüche

1. Antriebseinheit für, insbesondere kleine, Fahrzeuge, aufweisend eine Brennkraftmaschine (105),
ein stufenlos veränderbares Getriebe (110) vom Riemen- Typ, untergebracht in einem Getriebegehäuse (101), das sich nach hinten von einem Kurbelgehäuse (104) der Brennkraftmaschine (105) erstreckt, und
eine Nutbreiten- Einstellvorrichtung (7) zum Steuern eines Übersetzungsverhältnisses des Getriebes (110),
**dadurch gekennzeichnet, dass**
eine Zylinderblock- Montagebohrung (508), um einem Zylinderblock (426) der Brennkraftmaschine (105) zu gestatten, sich hindurch zu erstrecken, und eine Bohrung (600; 530), durch die sich die Nutbreiten- Einstellvorrichtung (7) erstreckt, an dem Kurbelgehäuse (104) gebildet sind, so dass sich Mittellinien (D1, D2) derselben parallel erstrecken.

2. Antriebseinheit nach Anspruch 1,
**dadurch gekennzeichnet, dass**
eine Zylinderblockmontageoberfläche (109), an dem der Zylinderblock (426) der Brennkraftmaschine (105) montiert ist, und eine Montageoberfläche (601), an der ein Teil der Nutbreiten- Einstellvorrichtung (7) montiert ist, an dem Kurbelgehäuse (106) gebildet sind, um im Wesentlichen parallel zu oder bündig mit einer gedachten Ebene (L) zu sein, die die Zylinderblockmontageoberfläche (109) enthält.

3. Antriebseinheit nach Anspruch 1 oder 2, **gekennzeichnet durch** ein stufenlos veränderbares Getriebe (110) vom Riemen- Typ, untergebracht in dem Getriebegehäuse (101), um eine Antriebskraft der Brennkraftmaschine (105) auf ein Antriebsrad (305) zu übertragen, aufweisend eine Primärscheibe (3), angeordnet auf einer Primärwelle (1), in die die Antriebskraft der Brennkraftmaschine (105) eingegeben wird, um eine Keilnut zum Umschlingen des Riemens zu bilden, eine Sekundärscheibe (4), angeordnet auf einer Sekundärwelle (2), die eine Antriebskraft für das Antriebsrad (305) entnimmt, um eine Keilnut zum Umschlingen des Riemens zu bilden, einen Keilriemen (5), geschlungen um die Keilnuten der Primärscheibe (3) und der Sekundärscheibe (4), um ein Drehmoment zwischen den beiden Scheiben (3, 4) zu übertragen, wobei die Nutbreiten- Einstellvorrichtung (7) einen elektrischen Motor (10) veranlasst, einen optionalen Bewegungsdruck auf die sich bewegende Scheibe (3A) der Primärscheibe (3) zu übertragen, um die Primärscheibe (3) und die Sekundärscheibe (4) in der Nutbreite einzustellen.

4. Antriebseinheit nach einem der Ansprüche 1 bis 3, **dadurch gekennzeichnet, dass** die Bohrung (600; 530), durch die sich die Nutbreiten- Einstellvorrichtung (7) erstreckt, gestattet zumindest einem von einem Gehäuse, dem elektrischen Motor (10), den Zahnrädern (11), die eine Ausgangsleistung des elektrischen Motors (10) auf ein sich hin- und her- bewegendes Zahnrad (12) der Nutbreiten- Einstellvorrichtung (7) überträgt, einem Scheibenpositionssensor (535), der eine Position der sich bewegenden Scheibe (3A) erfasst, einem Kabelbaum oder einem Kabelbaumbefestigungsteil zum Befestigen des Kabelbaums, die die Nutbreiten- Einstellvorrichtung (7) bilden, sich durch diese hindurch zu erstrecken.

5. Antriebseinheit nach einem der Ansprüche 1 bis 4, **gekennzeichnet durch** eine Mehrzahl von Zahnrädern (11), die eine Ausgangsleistung des elektrischen Motors (10) auf ein sich hin- und her- bewegendes Zahnrad (12) in der Nutbreiten-Einstellvorrichtung (7) überträgt, wobei der elektrische Motor (10) als eine Einzelmotoreinheit (500) gebildet ist, zusammengebaut in einer vorbestimmten positionalen Beziehung **durch** zumindest ein Zahnrad, das zu dem elektrischen Motor (10) am nahesten ist, und ein Zahnrad, das mit dem Zahnrad, das am nahesten ist, im Kämmeingriff ist, aus der Mehrzahl von Zahnrädern (11).

6. Antriebseinheit nach einem der Ansprüche 1 bis 5, **dadurch gekennzeichnet, dass** eine Richtung, in der der Zylinderblock (426) montiert ist, und eine Richtung, in der die Nutbreiten- Einstellvorrichtung (7) montiert ist, gleich gemacht sind.

7. Antriebseinheit nach einem der Ansprüche 1 bis 6, **dadurch gekennzeichnet, dass** eine Richtung, in der eine Montageschraube für den Zylinderblock (426) geklemmt ist, und eine Richtung, in der eine Montagebohrung für die Nutbreiten-Einstellvorrichtung (7) geklemmt ist, gleich gemacht sind.

8. Fahrzeug mit einer darin montierten Antriebseinheit nach den Ansprüchen 1 bis 7.

## Revendications

1. Unité motrice en particulier pour des véhicules de petite taille, comprenant
un moteur (105),
une transmission variable en continu du type à courroie (110) logée dans un carter de transmission (101) qui s'étend vers l'arrière à partir d'un carter (104) du moteur (105), et
un mécanisme de réglage de largeur de gorge (7) pour commander un rapport de transmission de la transmission (110),
**caractérisée en ce qu'**un trou de montage de bloc-cylindres (508) destiné à permettre au bloc-cylindres (426) du moteur (105) de le traverser, et un trou (600 ; 530) que traverse le mécanisme de réglage de largeur de gorge (7) sont formés dans le carter (104) de telle sorte que les axes médians (D1, D2) de ces trous s'étendent parallèlement.

2. Unité motrice selon la revendication 1, **caractérisée en ce qu'**une surface de montage de bloc-cylindres (109) sur laquelle est monté ledit bloc-cylindres (426) du moteur (105), et une surface de montage (601) sur laquelle est montée une partie du mécanisme de réglage de largeur de gorge (7) sont formées sur le carter (106) de manière à être globalement parallèles ou à être dans l'alignement d'un plan imaginaire (L) qui contient la surface de montage de bloc-cylindres (109).

3. Unité motrice selon la revendication 1 ou 2, **caractérisée par** une transmission variable en continu à courroie trapézoïdale (110) logée dans le carter de transmission (101) pour transmettre une force d'entraînement du moteur (105) à une roue motrice (305), comprenant une poulie primaire (3) qui est disposée sur un arbre primaire (1) dans lequel est entrée la force d'entraînement du moteur (105), pour former une gorge en V pour l'enroulement d'une courroie, une poulie secondaire (4) qui est disposée sur un arbre secondaire (2) qui fournit une force d'entraînement pour la roue motrice (305), pour former une gorge en V pour l'enroulement d'une courroie, et une courroie trapézoïdale (5) enroulée sur lesdites gorges en V de la poulie primaire (3) et de la poulie secondaire (4) pour transmettre un couple entre les deux poulies (3, 4), étant précisé que le mécanisme de réglage de largeur de gorge (7) amène un moteur électrique (10) à communiquer une poussée axiale optionnelle à la poulie mobile (3A) de la poulie primaire (3) afin de régler la largeur de gorge des poulies primaire (3) et secondaire (4).

4. Unité motrice selon l'une des revendications 1 à 3, **caractérisée en ce que** le trou (600 ; 530) que traverse le mécanisme de réglage de largeur de gorge (7) permet d'être traversé par un carter et/ou le moteur électrique (10) et/ou les pignons (11) qui transmettent une puissance du moteur électrique (10) à un pignon alternatif (12) du mécanisme de réglage de largeur de gorge (7) et/ou un capteur de détection de position de poulie (535) qui détecte une position de la poulie mobile (3A), et/ou un harnais, et/ou un élément de fixation de harnais destiné à fixer le harnais, qui constituent le mécanisme de réglage de largeur de gorge (7).

5. Unité motrice selon l'une des revendications 1 à 4, **caractérisée par** plusieurs pignons (11) qui transmettent la puissance du moteur électrique (10) à un pignon alternatif (12) prévu dans le mécanisme de réglage de largeur de gorge (7), étant précisé que le moteur électrique (10) est conçu comme une unité motrice unique (500) qui est assemblée dans une relation de position prédéterminée, avec un pignon tout près du moteur électrique (10) et un pignon en prise avec ce pignon, parmi les pignons (11).

6. Unité motrice selon l'une des revendications 1 à 5, **caractérisée en ce qu'**une direction dans laquelle le bloc-cylindres (426) est monté et une direction dans
laquelle le mécanisme de réglage de largeur de gorge (7) est monté sont identiques.

7. Unité motrice selon l'une des revendications 1 à 6, **caractérisée en ce qu'**une direction dans laquelle un boulon de montage pour le bloc-cylindres (426) est serré et une direction dans laquelle un boulon de montage pour le mécanisme de réglage de largeur de gorge (7) est serré sont identiques.

8. Véhicule sur lequel est montée l'unité motrice selon les revendications 1 à 7.
